# EUROPEAN PATENT SPECIFICATION

(11) **EP 2 882 946 B1**
(45) Date of publication and mention of the grant of the patent: **12.10.2016**
(21) Application number: 12748198.4
(22) Date of filing: 13.08.2012
(51) Int. Cl.: F01P 5/12, F16D 25/064, F16D 25/08, F04D 13/02, F04D 29/043, F16D 11/14

(54) **SWITCHABLE MECHANICAL COOLANT PUMP**
UMSCHALTBARE MECHANISCHE KÜHLMITTELPUMPE
POMPE DE LIQUIDE DE REFROIDISSEMENT MÉCANIQUE COMMUTABLE

(43) Date of publication of application: 17.06.2015
(73) Proprietor: Pierburg Pump Technology GmbH, 41460 Neuss (DE)
(72) Inventor: DURAND, Jean-Michel, F-57070 Metz (FR); BRÖMMEL, Achim, 47906 Kempen (DE); FOURNIER, Arnaud, F-57970 Yutz (FR)
(74) Representative: Patentanwälte ter Smitten Eberlein Rütten Partnerschaftsgesellschaft
(86) International application number: PCT/EP2012/065815
(87) International publication number: WO 2014/026705

(56) References cited:
- DE-A1-102006 048 482
- GB-A- 2 391 048
- JP-A- 2000 034 923

## Description

The present invention refers to a switchable mechanical coolant pump for an internal combustion engine.

State of the art mechanical coolant pumps for internal combustion engines are driven by a pulley wheel directly driven by the engine. The pump is provided with a switchable clutch arrangement, so that the impeller can be disengaged from the pulley wheel, if no relevant cooling performance is needed.

Such a pump is known from DE102006048482.

In the field of friction clutches, dry clutches as well as wet clutches are used. With a dry clutch high torques can be transmitted. But a dry clutch can be exposed to dust and heat. Wet clutches are often preferred because the heat can be dissipated from the clutch. A wet clutch is always rinsed and thereby isolated against oil and other particles etc.. But wet friction clutches can transmit low torques, only.

It is an object of the invention to provide a simple switchable mechanical coolant pump with a wet clutch for transmitting high torques in a compact design.

This object is solved by a mechanical coolant pump with the features of claim 1.

The coolant pump is provided with a driving shaft which is supported by a rotatable bearing at a static pump body. The bearing can be provided as a roller bearing.

According to the invention, a pulley wheel is supported by a co-rotating hollow driving shaft so that the pulley wheel always rotates together with the driving shaft. The pulley wheel is driven by a driving belt which is driven by an engine. Therefore, the pulley wheel is rotating with a rotational speed proportional to the engine's rotational speed.

The coolant pump is provided with a pump wheel being directly rotatably supported by and at the wet end of the driving shaft. The pump wheel is axially fixed at the driving shaft. The driving shaft is rotatable with respect to a static pump body.

An actuation rod is provided which is rotatably and axially shiftable arranged inside the hollow driving shaft. The actuation rod can axially be shifted by an actuation means between an engaged and a disengaged position. The actuation rod is an independent third element of the clutch arrangement.

Because of the shiftability of the clutch arrangement, the pumping performance of the pump is significantly reduced in the disengaged position of the actuation rod, even if the pulley wheel is still rotating. If the actuation rod is shifted into its axial disengaged position, the actuation rod thereby is not rotated by the driving shaft so that the pump wheel is not rotating anymore with the effect that the pump performance is close to zero.

The clutch arrangement is provided with radial clutch grooves at the proximal ends of the pump wheel and of the driving shaft. Locking bolts are provided at the proximal end of the actuation rod. The locking bolts engage the clutch grooves of the pump wheel and the driving shaft in the engaged axial position of the actuation rod. The radial grooves are not necessarily lying in a transversal plane. The radial grooves can be inclined in all directions, with respect to a transversal plane. However, the radial grooves and the corresponding locking bolts have at least a relevant radial component. This arrangement of the radial grooves and the locking bolts allows a simple form-locking clutch for transmitting high torque. Therefore, a coolant pump with high pumping performance is provided so that the pump is suitable for truck applications.

The clutch of the switchable mechanical coolant pump is provided as a form-locking clutch, so that high torques can be transferred. In contrast to a force-locking clutch, the form-locking clutch demands relatively low actuation forces to guarantee a slip-free engagement of the engaged clutch. The switchable mechanical coolant pump is compact. As a result, a long and reliable life time of the pump is achieved.

According to a preferred embodiment of the invention, a preload spring is axially preloading the actuation rod into the engaged position, whereby the activated actuation means shifts the actuation rod into the disengaged position. The pretension into the engaged position makes the pump fail-safe so that the cooling of the engine is guaranteed even if the actuator fails.

Preferably, the preload spring is provided in a hollow space of the driving shaft. As a consequence, the spring is protected and compact a construction can be realized.

According to a preferred embodiment of the invention, a rod seal is sealing the ring gap between the hollow driving shaft and the actuation rod. The rod seal is separating the dry section from the wet section and prevents leakage of coolant.

According to a preferred embodiment of the invention, the actuation means is realized as an electromagnetic or pneumatic actuation element which pulls or pushes the actuation rod when activated.

A pneumatic actuation element is a simple and inexpensive construction. In combustion engines pneumatic energy is inevitably available. In addition, pneumatic energy is insensitive to temperature fluctuations and ensures reliable operation even under extreme conditions. The pneumatic device is mechanically simple, reliable and cost-efficient in production.

The electromagnetic actuation element, however, is reliable and can be easily centrally controlled.

According to a preferred embodiment of the invention, the pump wheel is provided as an impeller. The impeller is axially fixed at the wet end of the driving shaft via a guiding pin and a circular slit, so that the driving shaft, the pump wheel and the locking bolts are axially aligned with each other.

The switchable mechanical coolant pump is provided with a static pump body separating the dry section from the wet section. The coolant pump body is mountable to an engine block of the internal combustion engine.

According to a preferred embodiment of the invention, the pump wheel is supported by a radial frictional bearing at the driving shaft. The frictional bearing is arranged in the wet section of the clutch, so that the frictional bearing is well-cooled and lubricated. The frictional bearing is cost-efficient.

According to a preferred embodiment of the invention, the coolant pump comprises a roller bearing supporting the driving shaft at a stationary cylindrical supporting section of the pump body. In practice, ready-made roller bearings are used which are press-fit into the respective parts of the coolant pump.

According to a preferred embodiment, the coolant pump is provided with exactly two radial clutch grooves at the pump wheel and the driving shaft, and corresponding exactly two locking bolts of the actuation rod. The two radial clutch grooves are the minimum and sufficient configuration to realize a form-locking arrangement of the clutch.

According to a preferred embodiment, an annular gap between the actuation rod and the driving shaft is provided. The preload spring can be housed in the annular gap.

According to a preferred embodiment, guiding elements are provided as guiding slopes at the distal end of the pump wheel and the driving shaft. The guiding elements are arranged in circumference direction between the radial grooves. The guiding elements are ramps, which push the locking bolts during the closing movement into the radial grooves.

The following is a detailed description of an embodiment of the invention with reference to the drawings, in which:
- Fig. 1: shows a longitudinal cross section of a switchable mechanical coolant pump,
- Fig. 2: shows a front view of a pump rotor wheel of the pump of figure 1 with an actuation rod and radial grooves, and
- Fig. 3: shows a side view of the actuation rod and the pump wheel including the guiding elements of the pump of figure 1.

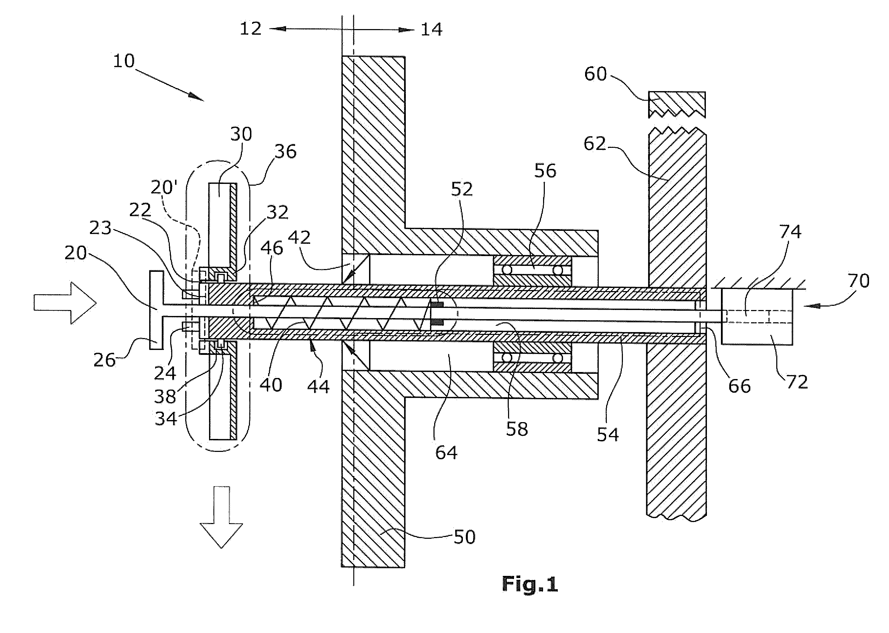

Figure 1 shows a switchable mechanical coolant pump 10 for pumping a coolant to an internal combustion engine. The switchable mechanical coolant pump 10 comprises a pump body 50 supporting a roller bearing 56, a driving shaft 54 holding an actuation rod 20, 20' and a pump wheel 30. The mechanical coolant pump 10 is directly driven by the internal combustion engine, for example via a driving belt 60 driving a pulley wheel 62 of the coolant pump 10. The metal pump body 50 separates a wet section 12 from a dry section 14 of the pump 10.

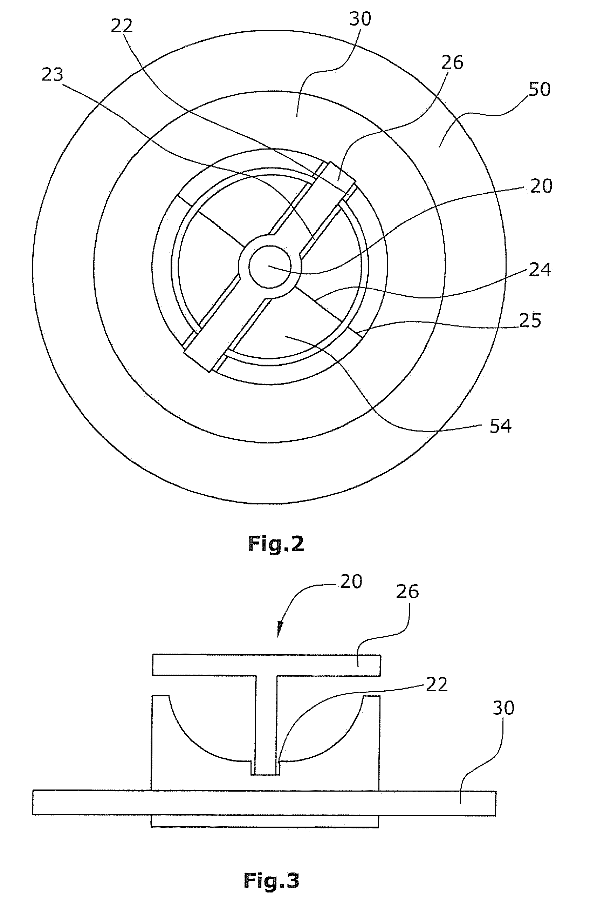

The outer surface of the wet section 12 of the driving shaft 54 supports the impeller-like pump wheel 30. The inner surface of the wet end of the hollow driving shaft 54 supports and guides the actuation rod 20. The proximal end of the actuation rod 20, 20' is provided with two locking bolts 26. The locking bolts 26 are lying in a transversal plane. Figure 2 shows in front view the locking bolts 26 of the actuation rod 20, 20' being engaged with radial clutch grooves 22 of the pump wheel 30 and radial clutch grooves 23 of the driving shaft 54. The radial clutch grooves 23 are also lying in a transversal plane and correspond to the locking bolts 26.

The figure 2 also shows ramp-like guiding elements 24, 25 of the driving shaft 54 and the pump wheel 30. The pump wheel 30 is supported at the driving shaft 54 by a frictional bearing 32. The pump wheel 30 is axially fixed at the driving shaft 54 by radial pins 34 in a corresponding ring slot 38 of the pump wheel 30.

In the disengaged position of the actuation rod 20 the locking bolts 26 are not engaged with the radial clutch grooves 22, 23. In the engaged position of the actuation rod 20' the locking bolts 26 are engaged with the radial clutch grooves 22, 23.

The driving shaft 54 is driven by a pulley wheel 62. The pulley wheel 62 is fixedly attached to the distal end of the driving shaft 54. The pulley wheel 62 can be driven via a driving belt 60 which can be driven by an internal combustion engine. The driving shaft 54 is protruding through a circular hollow space 64 of the mechanical coolant pump body 50. A ring-like shaft seal 42 is provided in the hollow space sealing a circular gap between the mechanical coolant pump body 50 and the driving shaft 54.

In the dry section 14, the driving shaft 54 is supported by a roller bearing 56 which is seated at a cylindrical portion of the pump body 50. In practice, ready-made roller bearings 56 are used which are press-fit into the respective portions of the pump body 50 and the driving shaft 54.

An actuation means 70 is fixed at the pump body 50. The actuation means 70 of the pump 10 is realized as an electromagnet 72 which magnetically interacts with a permanent magnet 74 at the distal end of the actuation rod 20, 20'. When the electromagnet 72 is energized with the correct polarization, the actuation rod 20 is pushed into its disengaged position. When the electromagnet 72 is not energized, the actuation rod 20' is pulled by the preload spring 40 into the engaged pumping position.

The driving shaft 54 can be engaged to the pump wheel 30 by a frictional clutch arrangement 36, which is positioned in the wet section of the pump 10, and which comprises the locking bolts 26 and the radial clutch groves 22, 23.

The clutch arrangement 36 is pretensioned into the engaged position by a pretensioning element 44, whereby the pretensioning element 44 is a single preload spring 40 which is positioned around the actuation rod 20, 20'. The preload spring 40 generates a constant axial pressure at a radial ring-like support surface 46 inside the driving shaft 54 so that no tilting moment is generated and jamming of the actuation rod 20, 20' at an inner side wall 46 of the driving shaft 54 can be avoided effectively.

If the actuation means 70 fails, the clutch is forced by the preload spring 40 into the engaged position, so that the pump 10 is always driven with an engaged clutch 36 and with full pumping performance. This makes the pump 10 failsafe.

Figure 3 shows the locking bolts 26 in the disengaged position and shows the guiding elements 25 of the pump wheel 30. If the actuation means 70 is not energized, the locking bolts 26 are shifted into the engaged position and are thereby guided by the inclined guiding elements 24, 25 into the respective clutch grooves 23.

### Reference-List

- 10: switchable mechanical coolant pump
- 12: wet section
- 14: dry section
- 20: actuation rod (disengaged position)
- 20': actuation rod (engaged position)
- 22: radial clutch grooves of the pump wheel
- 23: radial clutch grooves of the driving shaft
- 24: guiding elements of the driving shaft
- 25: guiding elements of the pump wheel
- 26: locking bolts
- 30: pump wheel
- 32: frictional bearing
- 34: pin's
- 36: clutch arrangement
- 38: corresponding slots
- 40: preload spring
- 42: shaft seal
- 44: pretensioning element
- 46: ring-like surface
- 50: pump body
- 54: driving shaft
- 56: roller bearing
- 58: annular gap
- 60: driving belt
- 62: pulley wheel
- 64: circular hollow space
- 66: rod seal
- 70: actuation means
- 72: electromagnet
- 74: permanent magnet

## Claims

1. Switchable mechanical coolant pump (10) for providing a coolant for an internal combustion engine,
with
a pulley wheel (62) supported by a co-rotating hollow driving shaft (54) which is rotatably supported by a static pump body (50),
a pump wheel (30) being directly and rotatably supported at the wet end (12) of the driving shaft (54),
an actuation rod (20, 20') being rotatably and axially shiftable arranged inside the driving shaft (54), the actuation rod (20, 20') being axially shiftable by an actuation means (72) between an engaged position (20') and a disengaged position (20), and
a clutch arrangement (36) defined by
• radial clutch grooves (22) at the pump wheel (30),
• radial clutch grooves (23) at the driving shaft (54), and
• a radial locking bolt (26) at the actuation rod (20, 20'), the locking bolt (26) engaging the clutch grooves (22, 23) of the pump wheel (30) and the driving shaft (54) in the engaged position of the actuation rod (20, 20').

2. The switchable mechanical pump (10) of claim 1, whereby a pretensioning element (44) is provided preloading the actuation rod (20, 20') into the engaged position, whereby the activated actuation means (70) shifts the actuation rod (20, 20') in the disengaged position.

3. The switchable mechanical coolant pump (10) of one of the preceding claims, whereby the pretensioning element (44) is a preload spring (40) in a hollow space (64) of the driving shaft (54).

4. The switchable mechanical coolant pump (10) of one of the preceding claims, whereby a rod seal (66) is provided, which is arranged with press-fit in the hollow space (64) radially between the driving shaft (54) and the actuation rod (20, 20') to separate a dry section (14) from a wet section (12).

5. The switchable mechanical coolant pump (10) of one of the preceding claims, whereby the actuation means (70) is an electromagnetic or pneumatic actuation element (74) which pulls or pushes the actuation rod (20, 20') when activated.

6. The switchable mechanical coolant pump (10) of one of the preceding claims, whereby the pump wheel (30) is provided as an impeller.

7. The switchable mechanical coolant pump (10) of one of the preceding claims, whereby the pump wheel (30) is supported by a radial frictional bearing (32).

8. The switchable mechanical coolant pump (10) of one of the preceding claims, whereby the actuation rod (20, 20') is provided with two locking bolts (26) and corresponding radial grooves (22, 23) at the pump wheel (30) and the driving shaft (54).

9. The switchable mechanical coolant pump (10) of one of the preceding claims, whereby an annular gap (58) between the actuation rod (20,20') and the driving shaft (54) is provided.

10. The switchable mechanical coolant pump (10) of one of the preceding claims, whereby the front end of the pump wheel (30) and/ or the front end of the driving shaft (54) is provide with guiding elements (24), guiding the locking bolts (26) into the radial grooves (22, 23).

## Patentansprüche

1. Schaltbare mechanische Kühlmittelpumpe (10) zum Liefern eines Kühlmittels für einen Verbrennungsmotor,
mit
einer Riemenscheibe (62), die von einer gleichsinnig drehenden hohlen Antriebswelle (54) gestützt ist, welche von einem statischen Pumpenkörper (50) drehbar gestützt ist,
einem Pumpenrad (30), das direkt und drehbar am nassen Ende (12) der Antriebswelle (54) gestützt ist,
einer Betätigungsstange (20, 20'), die drehbar und axial verschiebbar in der Antriebswelle (54) angeordnet ist, wobei die Betätigungsstange (20, 20') durch eine Betätigungseinrichtung (72) zwischen einer Eingriffsposition (20') und einer Ausrückposition (20) axial verschiebbar ist, und
einer Kupplungsanordnung (36) gebildet durch
• radiale Kupplungsnuten (22) am Pumpenrad (30),
• radiale Kupplungsnuten (23) an der Antriebswelle (54), und
• einen radialen Verriegelungsbolzen (26) an der Betätigungsstange (20, 20'), wobei der Verriegelungsbolzen (26) in der Eingriffsposition der Betätigungsstange (20, 20') in die Kupplungsnuten (22, 23) des Pumpenrades (30) und der Antriebswelle (54) eingreift.

2. Schaltbare mechanische Pumpe (10) nach Anspruch 1, bei welcher ein Vorspannelement (44) vorgesehen ist, welches die Betätigungsstange (20, 20') in die Eingriffsposition vorspannt, wobei die aktivierte Betätigungseinrichtung (50) die Betätigungsstange (20, 20') in die Ausrückposition verschiebt.

3. Schaltbare mechanische Pumpe (10) nach einem der vorhergehenden Ansprüche, bei welcher das Vorspannelement (44) eine Vorspannfeder (40) in einem Hohlraum (64) der Antriebswelle (54) ist.

4. Schaltbare mechanische Pumpe (10) nach einem der vorhergehenden Ansprüche, bei welcher eine Stangendichtung (66) vorgesehen ist, die im Presssitz in dem Hohlraum (64) radial zwischen der Antriebswelle (54) und der Betätigungsstange (20, 20') angeordnet ist, um einen trockenen Abschnitt (14) von einem nassen Abschnitt (12) zu trennen.

5. Schaltbare mechanische Pumpe (10) nach einem der vorhergehenden Ansprüche, bei welcher die Betätigungseinrichtung (70) ein elektromagnetisches oder pneumatisches Betätigungselement (74) ist, das bei Aktivierung die Betätigungsstange (20, 20') schiebt oder zieht.

6. Schaltbare mechanische Pumpe (10) nach einem der vorhergehenden Ansprüche, bei welcher das Pumpenrad (30) als Laufrad ausgebildet ist.

7. Schaltbare mechanische Pumpe (10) nach einem der vorhergehenden Ansprüche, bei welcher das Pumpenrad (30) durch ein radiales Reiblager (32) gestützt ist.

8. Schaltbare mechanische Pumpe (10) nach einem der vorhergehenden Ansprüche, bei welcher die Betätigungsstange (20, 20') mit zwei Verriegelungsbolzen (26) und entsprechenden radialen Nuten (22, 23) in dem Pumpenrad (30) und der Antriebswelle (54) versehen ist.

9. Schaltbare mechanische Pumpe (10) nach einem der vorhergehenden Ansprüche, bei welcher ein Ringspalt (58) zwischen der Betätigungsstange (20, 20') und der Antriebswelle (54) vorgesehen ist.

10. Schaltbare mechanische Pumpe (10) nach einem der vorhergehenden Ansprüche, bei welcher das vordere Ende des Pumpenrades (30) und/oder das vordere Ende der Antriebswelle (54) mit Führungselementen (24) versehen sind, welche die Verriegelungsbolzen (26) in die radialen Nuten (22, 23) führen.

## Revendications

1. Pompe de liquide de refroidissement (10) mécanique commutable pour fournir du liquide de refroidissement pour un moteur à combustion interne,
comprenant
une poulie (62) supportée par un arbre d'entrainement (54) creux en c-rotation, l'arbre étant supporté de manière rotative par un corps de pompe (50) immobile,
une roue de pompe (30) supportée de manière directe et rotative à l'extrémité humide (12) de l'arbre d'entrainement (54),
une tige d'actionnement (20, 20') rotative et apte à être déplacée axialement, disposée dans l'arbre d'entrainement (54), la tige d'actionnement (20, 20') pouvant être déplacée axialement par un moyen d'actionnement (72) entre une position engagée (20') et une position dégagée (20), et
un ensemble d'embrayage (36) défini par
• des rainures radiales (22) d'embrayage dans la roue de pompe (30),
• des rainures radiales (23) d'embrayage dans l'arbre d'entrainement (54), et
• un boulon de verrouillage (26) radial sur la tige d'actionnement (20, 20'), ledit boulon de verrouillage (26) engageant les rainures (22, 23) d'embrayage de la roue de pompe (30) et de l'arbre d'entrainement (54) dans la position engagée de la tige d'actionnement (20, 20').

2. Pompe de liquide de refroidissement (10) mécanique commutable selon la revendication 1, dans laquelle un élément de précontrainte (44) est prévu, ledit élément précontraignant la tige d'actionnement (20, 20'), le moyen d'actionnement (70) activé déplace la tige d'actionnement (20, 20') dans la position dégagée.

3. Pompe de liquide de refroidissement (10) mécanique commutable selon l'une quelconque des revendications précédentes, dans laquelle ledit élément de précontrainte (44) est un ressort de précontrainte (40) dans un espace creux (64) de l'arbre d'entrainement (54).

4. Pompe de liquide de refroidissement (10) mécanique commutable selon l'une quelconque des revendications précédentes, dans laquelle un joint (66) pour la tige est prévu, le joint étant disposé en ajustage serré dans l'espace creux (64) radialement entre l'arbre d'entrainement (54) et la tige d'actionnement (20, 20') pour séparer une section sèche (14) d'une section humide (12).

5. Pompe de liquide de refroidissement (10) mécanique commutable selon l'une quelconque des revendications précédentes, dans laquelle le moyen d'actionnement (70) est un élément d'actionnement (74) électromagnétique ou pneumatique qui, quand il est activé, tire ou pousse la tige d'actionnement (20, 20').

6. Pompe de liquide de refroidissement (10) mécanique commutable selon l'une quelconque des revendications précédentes, dans laquelle la roue de pompe (30) est un rotor.

7. Pompe de liquide de refroidissement (10) mécanique commutable selon l'une quelconque des revendications précédentes, dans laquelle la roue de pompe (30) est supportée par un palier lisse (32) radial.

8. Pompe de liquide de refroidissement (10) mécanique commutable selon l'une quelconque des revendications précédentes, dans laquelle la tige d'actionnement (20, 20') est munie de deux boulons de verrouillage (26) et rainures radiales (22, 23) correspondantes sur la roue de pompe (30) et l'arbre d'entrainement (54).

9. Pompe de liquide de refroidissement (10) mécanique commutable selon l'une quelconque des revendications précédentes, dans laquelle une fente (58) est prévue entre la tige d'actionnement (20, 20') et l'arbre d'entrainement (54).

10. Pompe de liquide de refroidissement (10) mécanique commutable selon l'une quelconque des revendications précédentes, dans laquelle l'extrémité avant de la roue de pompe (30) et/ou l"extrémité avant de l'arbre d'entrainement (54) sont munies d'éléments de guidage (24) guidant les boulons de verrouillage (26) dans les rainures radiales (22, 23).
